# EUROPEAN PATENT APPLICATION

(11) **EP 4 787 568 A1**
(43) Date of publication of application: **05.08.2026**
(21) Application number: 24871631.8
(22) Date of filing: 23.08.2024
(51) Int. Cl.: H01M 50/204, H01M 10/613, H01M 10/615, H01M 10/643, H01M 10/647, H01M 10/655, H01M 10/6571, H01M 50/209, H01M 50/213, H01M 50/271, H01M 50/588, H01M 50/591

(54) **POWER SUPPLY DEVICE**

(30) Priority: 29.09.2023 JP 2023170505
(71) Applicant: Panasonic Intellectual Property Management Co., Ltd., Kadoma-shi, Osaka 571-0057 (JP)
(72) Inventor: SAKAMOTO, Tomonori, Kadoma-shi, Osaka 571-0057 (JP)
(74) Representative: Novagraaf International SA
(86) International application number: PCT/JP2024/030020
(87) International publication number: WO 2025/069829

(57) **Abstract**

A power supply device includes: secondary battery cells each having a first cell end surface and a second cell end surface, the secondary battery cells being disposed such that the first cell end surface is flush with a single plane; a heater unit having a planar shape having a first heater surface and a second heater surface, the first heater surface facing the first cell end surface of the each of the secondary battery cells; a first heat-transfer sheet disposed between the first heater surface and the first cell end surface of the each of the secondary battery cells, the first heat-transfer sheet having thermal conductivity; a second heat-transfer sheet facing the second heater surface, the second heat-transfer sheet having thermal conductivity; and an outer case demarcating a housing space housing the secondary battery cells, the first heat-transfer sheet, the heater unit, and the second heat-transfer sheet, the outer case having a first case surface.

## Description

### Technical Field

The present disclosure relates to a power supply device.

### Background Art

A power supply device for powering electrical equipment is used in which rechargeable secondary battery cells, such as lithium-ion secondary batteries, are connected in series or parallel to one another and housed in an outer case (for example, PTL 1). It is known that characteristics of lithium-ion batteries to be used in such a power supply device degrade when the lithium-ion batteries are used at low temperatures. Thus, for operation at low temperatures, a heating mechanism for heating secondary battery cells with a heater has been proposed (for example, PTL 1). PTL 1 discloses a battery pack including cylindrical batteries and a battery holder including battery housing spaces housing the cylindrical batteries, respectively. The battery pack includes a heating element disposed so that a heating surface is in surface contact with a part of the outer surface of each cylindrical battery, and directly heats a part of each cylindrical battery with the heating element.

On the other hand, secondary battery cells are known to generate heat by charging and discharging. Since secondary battery cells deteriorate at high temperatures, the secondary battery cells are necessarily cooled. For this reason, as a cooling mechanism for cooling the secondary battery cells, an air-cooling fan, a cooling plate that circulates a refrigerant inside, and the like, are proposed.

However, both a heating mechanism for heating and the cooling mechanism for cooling added to a secondary battery cell causes a problem of an increase of the size of the power supply device.

### CITATION LIST

### Patent Literature

PTL 1: Japanese Patent Laid-Open Publication No. 2012-243535

### SUMMARY OF INVENTION

A problem of the present disclosure is to provide a power supply device heating and cooling secondary battery cells with a simple configuration. Another problem is to provide a power supply device that reduces temperature unevenness in heating secondary battery cells. Descriptions of these problems and objects of the present disclosure do not preclude the existence of other problems and objects. Furthermore, one aspect of the present disclosure does not need to solve all of these subjects. Furthermore, objects other than the above objects may be extracted from the descriptions of the specification, drawings, and claims of the present disclosure.

A power supply device according to an aspect of the present disclosure includes: a plurality of secondary battery cells, each of the plurality of secondary battery cells having a first cell end surface and a second cell end surface, the secondary battery cells being disposed such that the first cell end surface is flush with a single plane; a heater unit having a planar shape having a first heater surface and a second heater surface, the first heater surface facing the first cell end surface of the each of the plurality of secondary battery cells; a first heat-transfer sheet disposed between the first heater surface and the first cell end surface of the each of the plurality of secondary battery cells, the first heat-transfer sheet having thermal conductivity; a second heat-transfer sheet facing the second heater surface, the second heat-transfer sheet having thermal conductivity; and an outer case demarcating a housing space housing the plurality of secondary battery cells, the first heat-transfer sheet, the heater unit, and the second heat-transfer sheet, the outer case having a first case surface.

In the power supply device according to the aspect of the present disclosure, the heater unit faces the first end surface of the each of the secondary battery cells, the secondary battery cells are heated in response to the environmental temperature at which the power supply device is used, thereby suppressing performance deterioration. Moreover, when the secondary battery cells generate heat, the heat is dissipated to the outside from the first end surface of the each of the secondary battery cells via the second heat-transfer sheet. This configuration heats and cools the same end surface of the secondary battery cells, advantageously providing a simple configuration.

### BRIEF DESCRIPTION OF DRAWINGS

FIG. 1 is a perspective view of a power supply device in accordance with Exemplary Embodiment 1.
FIG. 2 is a perspective view of the power supply device shown in FIG. 1 viewed obliquely from below on a rear side.
FIG. 3 is an exploded perspective view of the power supply device shown in FIG. 1.
FIG. 4 is an exploded perspective view of the power supply device shown in FIG. 2.
FIG. 5 is an exploded perspective view of the power supply device shown in FIG. 3.
FIG. 6 is an exploded perspective view of the power supply device in FIG. 5.
FIG. 7 is a sectional view of the device along line VII-VII shown in FIG. 1.
FIG. 8 is an exploded perspective view of a heater unit.
FIG. 9 is a schematic diagram showing a thermally bonded part between a secondary battery cell and a heater unit.
FIG. 10 is an exploded perspective view showing a cooling plate added to the power supply device shown in FIG. 2.
FIG. 11 is a schematic diagram showing a thermally bonded part between a secondary battery cell and a heater unit of a power supply device according to a modified example.
FIG. 12 is a plan view of the device visually showing a simulation result of temperature change when the power supply device is heated.
FIG. 13 visually shows a simulation result of a temperature change in a cross section of the device along line XIII-XIII shown in FIG. 12.
FIG. 14 visually shows a simulation result of a temperature change when the power supply device is cooled.
FIG. 15 is a schematic diagram showing a thermally bonded part between a secondary battery cell and a heater unit of a power supply device according to Exemplary Embodiment 2.
FIG. 16 is a plan view of the device for showing a pattern of the heater unit of the power supply device according to Embodiment 2.
FIG. 17 is a plan view of a power supply device according to Exemplary Embodiment 3 for showing a pattern of a heater unit.

### Description of Embodiment

Aspects of the present disclosure may be specified by the following configurations and features.

In a power supply device according to another aspect of the present disclosure, in the above aspect, the outer case has an opening provided in at least the first case surface. The outer case includes a bottom case closing the opening in the first case surface, the bottom case facing the second heat-transfer sheet in the housing space, the bottom case having thermal conductivity. In the above configuration, heat generated by the secondary battery cells is dissipated to the outside via the second heat-transfer sheet and the bottom case with high thermal conductivity.

In any one of the above aspect, a power supply device according to still another aspect of the present disclosure further includes a cooling plate connected to an outer surface of the bottom case to be coupled thermally with the outer surface of the bottom case. This configuration allows the secondary battery cells to be thermally bonded to the cooling plate via the second heat-transfer sheet and the bottom case, and the secondary battery cells can be efficiently cooled with the cooling plate.

In any one of the aspects, a power supply device according to yet another aspect of the present disclosure may further include a first insulating sheet interposed between the heater unit and the first heat-transfer sheet.

A power supply device according to a further aspect of the present disclosure may further include a second insulating sheet interposed between the second heat-transfer sheet and the bottom case. In the above configuration, he first insulating sheet may insulate the heater unit from the secondary battery cells. Furthermore, the second insulating sheet may insulate the heater unit from the bottom case, thus enhancing safety.

In a power supply device according to a further aspect of the present disclosure, in any one of the above aspects, the heater unit includes a heating element in a surface thereof.

In a power supply device according to a further aspect of the present disclosure, in any of the above aspects, the heating element is sparser at a central region of the heater unit than at a peripheral region the heater unit. In the above configuration, the heating element of the heater unit is sparser at the central region which is relatively easy to be heated while being denser at the peripheral region which is relatively easy to dissipate heat and less likely to increase in temperature than the central region, thereby suppressing uneven heating when the secondary battery cells are heated with the heater unit.

A power supply device according to a further aspect of the present disclosure includes a plurality of secondary battery cells disposed adjacent to one another, each of the plurality of secondary battery cells including a first end surface and a second end surface, an outer case housing the plurality of secondary battery cells, and a heater unit facing the first end surface of the each of the plurality of secondary battery cells. The heater unit includes a heating element on a surface thereof. The density of the heating element is lower at a central region of the heater unit than at peripheral region of the heater unit. In this configuration, the heating element of the heater unit is disposed so as to be denser at the peripheral region where heat is dissipated more easily than at the central region, thus suppressing uneven heating when the secondary battery cells are heated with the heater unit.

In the power supply device of a further aspect of the present disclosure, in any of the above aspects, the heater unit partially opens in the central region of the heater unit wherein the heating element is sparser.

In the power supply device of a further aspect of the present disclosure, in any of the above aspects, the each of the plurality of secondary battery cells includes a positive electrode at the second cell end surface. The second cell end surface is connected to a lead plate.

In a power supply device according to another aspect of the present disclosure, in any of the above aspects, no lead plate facing the first cell end surface is provided. In the above configuration, the second cell end surfaces of the secondary battery cells connected to one another with a lead plate allow the first cell end surface on which no lead plate is provided to be used for heating and heat dissipation, thus providing both a structure for electrical connection and a structure for heat dissipation.

Exemplary embodiments of the present disclosure will be described below with reference to the drawings. However, the exemplary embodiments described below are examples for only giving a concrete form to the technical idea of the present disclosure, and the present disclosure is not limited to the following. Furthermore, members set forth in claims are never limited to members in the exemplary embodiments. In particular, a size, a material, a shape, relative arrangement, and the like, of the components described in the exemplary embodiments are not intended to limit the scope of the present disclosure only thereto unless otherwise described but merely illustrative. Note here that a size, a positional relationship, and the like, of the members in each drawing may be exaggerated for clarifying the description. Furthermore, in the following description, the same or similar members are represented by the same names and reference symbols, and the detailed description thereof is appropriately omitted. Furthermore, as for each component constituting the present disclosure, one member may serve as a plurality of components by forming the plurality of components with the same member. On the contrary, a function of one member may be shared by a plurality of members.

A power supply device of the present disclosure may be used as a backup power supply for servers in stationary power storage applications, as a power supply device for home, business, or factory use, as a power supply for portable electrical equipment such as radios, electric cleaners, and power tools, as a power supply for powering mobile objects such as electric carts, electric scooters, and assisted bicycles, and as a power supply for powering vehicles such as hybrid cars and electric automobiles. As an exemplary embodiment of the present invention, a power supply device to be used as a power supply for storage will be described below.

### Exemplary Embodiment 1

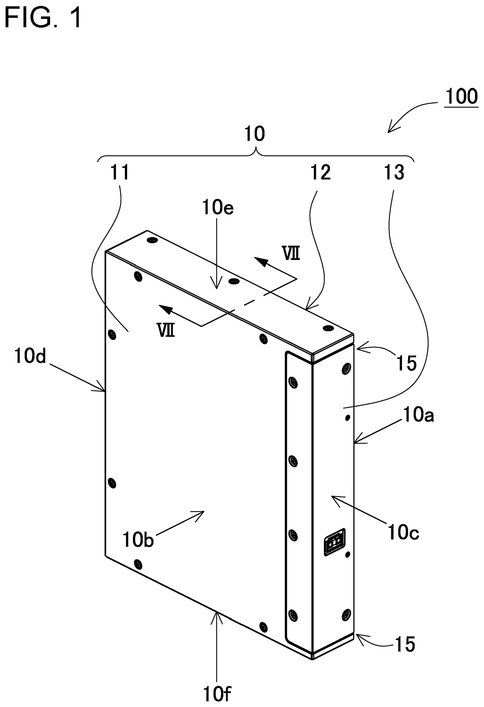

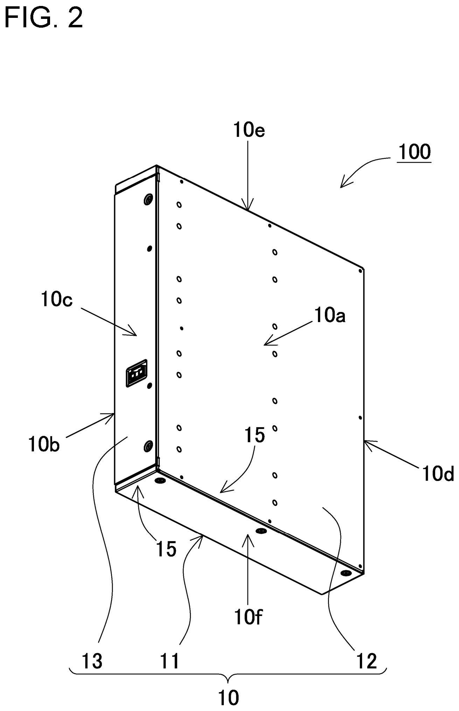

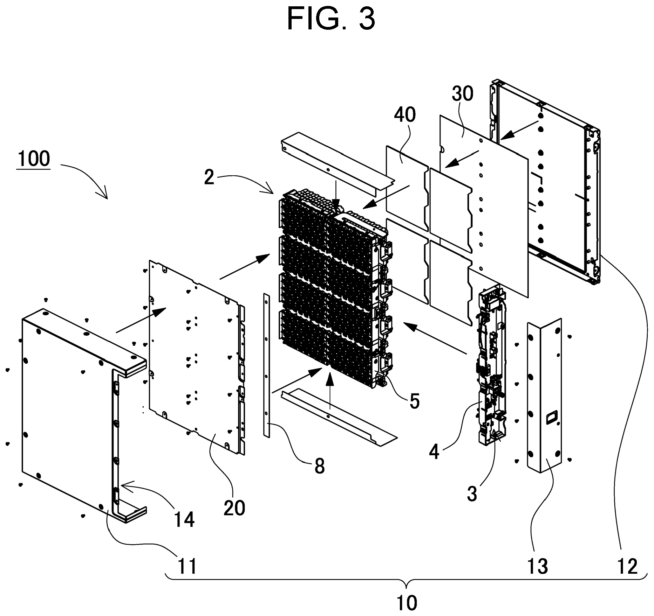

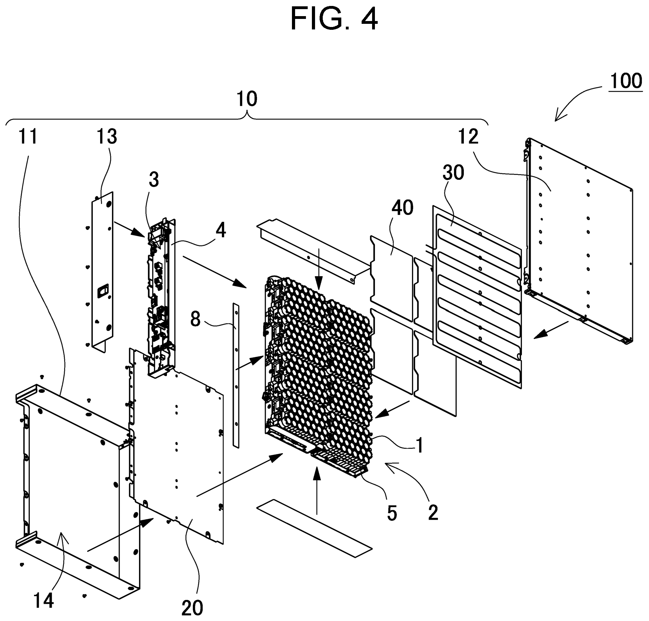

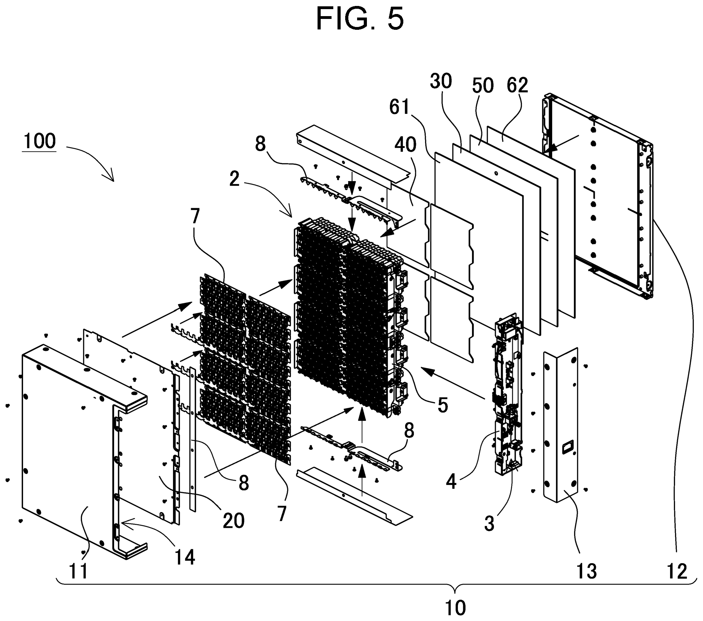

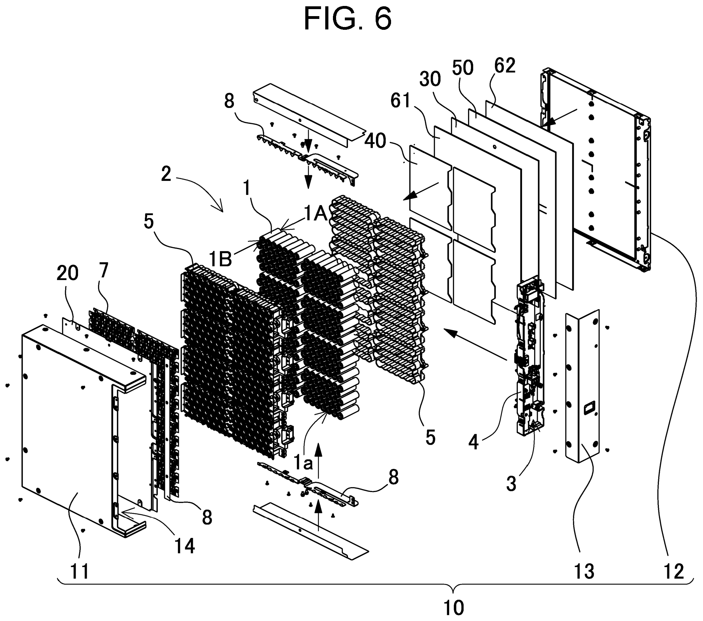

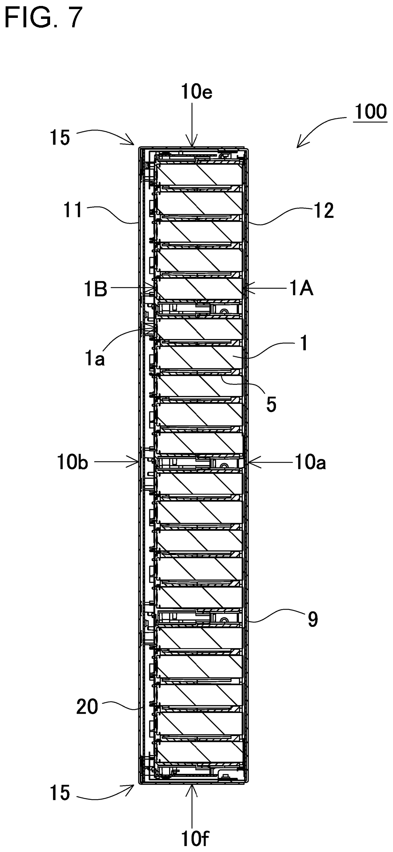

Power supply device 100 according to Exemplary Embodiment 1 of the present disclosure is shown in FIGS. 1-7. FIG. 1 is a perspective view of power supply device 100 in accordance with Embodiment 1. FIG. 2 is a perspective view of power supply device 100 shown in FIG. 1 viewed obliquely from below on a rear side. FIG. 3 is an exploded perspective view of power supply device 100 shown in FIG. 1. FIG. 4 is an exploded perspective view of power supply device 100 shown in FIG. 2. FIG. 5 is an exploded perspective view of power supply device 100 shown in FIG. 3. FIG. 6 is an exploded perspective view of power supply device 100 shown in FIG. 4. FIG. 7 is a sectional view of the device along line VII-VII shown in FIG. 1. Power supply devices 100 shown in these drawings include outer case 10, battery module 2, metal plate 20, heater unit 30, first heat-transfer sheet 40, second heat-transfer sheet 50, and circuit board 3.

### Outer Case 10

Outer case 10 houses therein battery module 2, metal plate 20, heater unit 30, and circuit board 3. Outer case 10 may have any shape having housing space 14 inside thereof. In the example shown in FIGS. 1-2, outer case 10 has a box shape extending elongatedly in one direction. Outer case 10 has first case surface 10a, second case surface 10b, third case surface 10c, fourth case surface 10d, fifth case surface 10e, and sixth case surface 10f. First case surface 10a and second case surface 10b face each other and constitute main surfaces of outer case 10. Third case surface 10c and fourth case surface 10d face each other and connect first case surface 10a to second case surface 10b. Fourth case surface 10d and fifth case surface 10e face each other, connect first case surface 10a to second case surface 10b, and connect third case surface 10c to fourth case surface 10d.

Outer case 10 is divided into three parts: main case 11, bottom case 12, and front panel 13, as shown in, for example, FIGS. 3-6. The outer case is not necessarily limited to the configuration of being divided into three parts. For example, the outer case may be divided into two parts, that is, an upper case and a lower case, or may be divided into four or more parts.

Outer case 10 has an opening at least in first case surface 10a. In the examples shown in FIGS. 3-6, main case 11 has an opening in the right-side surface corresponding to first case surface 10a and another opening in a case front surface corresponding to third case surface 10c. Bottom case 12 closes the opening at the right-side surface. Furthermore, front panel 13 closes third case surface 10c.

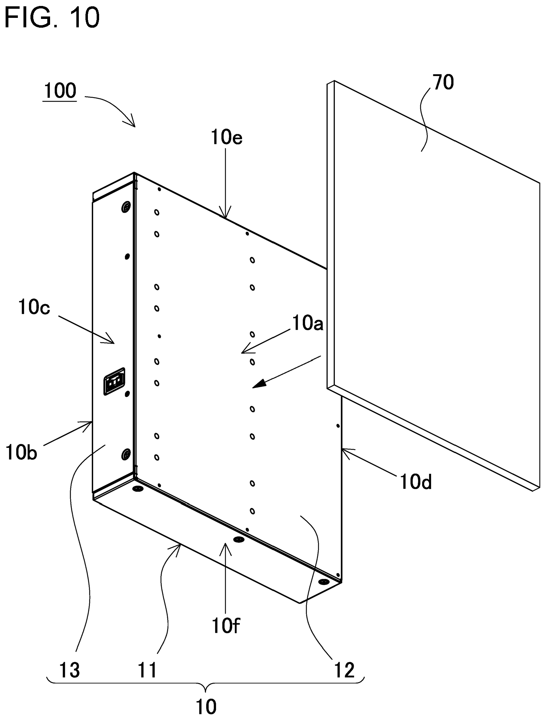

Outer case 10 is made of a material with high strength and high heat dissipation property, for example, a metal, such as a galvanized steel plate or a stainless steel plate. Bottom case 12 is preferably made of a material with high thermal conductivity. Thus, as shown in FIG. 10 mentioned below, in a configuration in which cooling plate 70 is fixed to bottom case 12, the heat inside outer case 10 may be efficiently transferred toward cooling plate 70 and dissipated. Outer case 10 may be made of a member with high insulation property, for example, resin, such as polycarbonate or a PC-ABS alloy.

### Cooling Plate 70

Cooling plate 70 is connected to an outer surface of bottom case 12 and coupled thermally with outer surface of bottom case 12. In this configuration, a heat generation source, such as secondary battery cells 1, housed in outer case 10 is coupled thermally to cooling plate 70 via bottom case 12, and secondary battery cells 1 are efficiently cooled with cooling plate 70. Cooling plate 70 is preferably made of a material, such as aluminum or an alloy thereof, with high heat dissipation property. A heat sink including heat dissipation fins is more preferable. In addition, blowing air to first case surface 10a or cooling plate 70 facilitates promote dissipation effect and facilitates cooling of cells.

Bottom case 12 may face second heat-transfer sheet 50 mentioned later in housing space 14. In this configuration, heat generated by secondary battery cells 1 is dissipated to the outside via second heat-transfer sheet 50 and bottom case 12 with high thermal conductivity.

As shown in, e.g., FIGS. 3-7, outer case 10 has therein housing space 14 for housing battery module 2 inside thereof. Outer case 10 may be disposed in a vertical orientation so that metal plate 20 and heater unit 30 to be housed in housing space 14 are in a position located on the side surfaces of the plurality of secondary battery cells 1. As described later, outer case 10 disposed in a vertical orientation allows an effect that the temperature distribution to be more uniform due to convection of warmed air and the like.

### Battery Module 2

Battery module 2, also called a core pack, houses therein secondary battery cells 1. Battery module 2 may include battery blocks, and the secondary battery cells may be housed in each battery block. In the examples shown in, e.g., FIGS. 4, and 6-7, a large number of cylindrical secondary battery cells 1 are housed and held in a position in the horizontal orientation in battery holder 5.

Secondary battery cells 1 is connected in series or parallel to one another with lead plate 7. The number of series connections or parallel connections can be set arbitrarily according to the required specifications. In the example shown in, e.g., FIG. 4, 280 secondary battery cells 1 are used in entire battery module 2, forming 20 in series x 14 in parallel, but the configuration is not limited to this.

Battery holder 5 includes housing tubes each housing secondary battery cell 1. For example, as shown in FIG. 7, each battery holder 5 is divided into two parts, that is, an upper part and lower part, and the two divided housing tubes house secondary battery cells 1 sandwiched from above and below. Battery holder 5 may be made of resin, such as polycarbonate, with high insulation property.

### Secondary Battery Cell 1

Secondary battery cell 1 has first cell end surface 1A and second cell end surface 1B. First cell end surface 1A and second cell end surface 1B are opposite to each other. Battery holder 5 allows secondary battery cells 1 to be arranged in a position in which first cell end surfaces 1A are flush with a single plane. This configuration facilitates thermally connecting heater unit 30 to first cell end surface 1A, which will be described later.

For each secondary battery cell 1, a secondary battery cell with a cylindrical or rectangular shape may be used. In the examples shown in, e.g., FIGS. 4, 6, and 7, cylindrical secondary battery cells 1 are disposed in a staggered pattern in a position in a horizontal orientation. The number and disposition of secondary battery cells 1 are not limited to these examples, and any number and disposition can be employed appropriately. For example, cylindrical secondary battery cells may be disposed in a matrix.

Each secondary battery cell 1 includes a positive electrode and a negative electrode. One of the positive and negative electrodes is preferably provided on first cell end surface 1A of secondary battery cell 1, and the other is preferably provided on second cell end surface 1B of secondary battery cell 1. In the examples shown in, e.g., FIG. 7, second cell end surface 1B is a bottom of the outer covering can, and the outer covering can is the negative electrode. For secondary battery cells 1, known secondary batteries such as lithium ion secondary batteries, nickel metal hydride batteries, nickel cadmium batteries, and the like, can be appropriately used.

### Cell Exhaust Mechanism 1a

As shown in FIG. 7, an outer covering can of each of secondary battery cells 1 is provided with cell exhaust mechanism 1a. Cell exhaust mechanism 1a opens a valve in response to an increase in the internal pressure of the outer covering can, and releases a gas inside the outer covering can to the outside. Cell exhaust mechanism 1a is provided on, for example, second cell end surface 1B in secondary battery cell 1, preferably on a surface on which the positive electrode is provided.

### Gas Exhaust Port 15

Outer case 10 includes gas exhaust port 15 for releasing high-pressure gas to the outside when a valve of cell exhaust mechanism 1a of secondary battery cell 1 opens and discharges a high-pressure gas. As shown in FIG. 1, in power supply device 100 according to Embodiment 1, a gap between first case 11 and second case 12 constituting outer case 10 or a gap between first case 11 and third case 13 constitutes gas exhaust port 15. The outer case may have an opening constituting the gas exhaust port.

### Lead Plate 7

Lead plate 7 is disposed on the side surface of battery holder 5. Lead plate 7 connects electrodes of second cell end surfaces 1B of secondary battery cells 1 to one another, and connects secondary battery cells 1 in series or in parallel to one another. In the example shown in, e.g., FIG. 3, second cell end surfaces 1B of 280 secondary battery cells 1 are connected to one another by lead plate 7, and secondary battery cells 1 are connected in 20 series and 14 parallel. The number and disposition of the secondary battery cells and the number of series and parallel connections are not limited to this example, and any number and disposition can be employed appropriately. Lead plates 7 are made of metal plates, such as aluminum plates, nickel plates, and copper plates, with high conductivity.

Lead plate 7 is not provided to face first cell end surface 1A of battery module 2. This configuration facilitates thermal bonding to heater unit 30. That is to say, first cell end surface 1A of secondary battery cells 1 serves as a thermally bonded surface to heater unit 30, and second cell end surface 1B serves as an electrical connection surface connected to lead plate 7, thus simplifying the configuration and facilitating electrical connection and temperature management. In accordance with the embodiment, secondary battery cells 1 are heated and cooled near the thermally bonded surface. The opposing functions of heating and cooling which were previously performed separately are thus performed on the same plane, thus simplifying the configuration for temperature management of secondary battery cell 1, and contributing to miniaturization and cost reduction of power supply device 100.

### Busbar 8

A block of a plurality of secondary battery cells 1 connected by lead plate 7 is connected further with busbar 8. Busbar 8 is made of metal, such as aluminum, nickel, or copper, with excellent electric conductivity.

### Circuit Board 3

Battery module 2 is connected to circuit board 3 via lead plate 7. A charge/discharge circuit and a protection circuit are mounted onto circuit board 3. The charge/discharge circuit is configured to charge and discharge secondary battery cells 1. The protection circuit is configured to monitor voltages and temperatures of secondary battery cells 1 and cut off current at the time of abnormality. Circuit board 3 is made of, e.g., a glass epoxy board. Circuit board 3 is held on board holder 4. In the examples shown in FIGS. 3-6, board holder 4 is disposed on an end surface of battery module 2 in a thickness direction of battery module 2. Board holder 4 is covered with front panel 13. Front panel 13 is connected to a connector on circuit board 3, and includes a connection terminal outside.

### Metal Plate 20

Metal plate 20 demarcates a gas exhaust path configured to guide gas released from cell exhaust mechanism 1a of one of secondary battery cells 1 opens to gas exhaust port 15 inside outer case 10. The gas exhaust path is formed on the side surface of battery module 2 and on the side provided with cell exhaust mechanism 1a of each secondary battery cell 1, that is, at a side of second cell end surface 1B. In the example shown in FIG. 7, the gas exhaust path is formed between the left side of battery module 2 and the inner surface of main case 11 that constitutes second case surface 10b of outer case 10. Therefore, each of secondary battery cells 1 constituting battery module 2 is held in a position in which the end surface provided with cell exhaust mechanism 1a is on the left side in the figure. The gas exhaust path demarcated by metal plate 20 constitutes, for example, a gas duct

Metal plate 20 shown in FIGS. 3-6 has a size and shape substantially identical to those of the end surface of battery module 2. Metal plate 20 is strong enough to withstand high temperature and high-pressure gas released from cell exhaust mechanism 1a. Metal plate 20 is made of a metal, such as a galvanized steel plate or a stainless steel, with excellent thermal conductivity.

### Heater Unit 30

Heater unit 30 is thermally coupled to battery module 2 and configured to heat secondary battery cells 1 when necessary. In general, a preferred operating range is defined for secondary battery cells to operate properly. For example, in a state of low ambient temperatures such as in cold regions, the cells may not exert performance sufficiently and may deteriorate. Therefore, when a temperature of the use environment is low, it is necessary to heat secondary battery cells. In accordance with the embodiment, heater unit 30 is activated to heat secondary battery cells 1.

Heater unit 30 has a planar shape having first heater surface 31 and second heater surface 32. First heater surface 31 and second heater surface 32 are opposite to each other. Heater unit 30 is disposed in a position in which first heater surface 31 faces first cell end surfaces 1A of secondary battery cells 1. In examples shown in, e.g., FIGS. 3-6, heater unit 30 is disposed at the right side of battery module 2, that is, between battery module 2 and bottom case 12 constituting first case surface 10a of outer case 10.

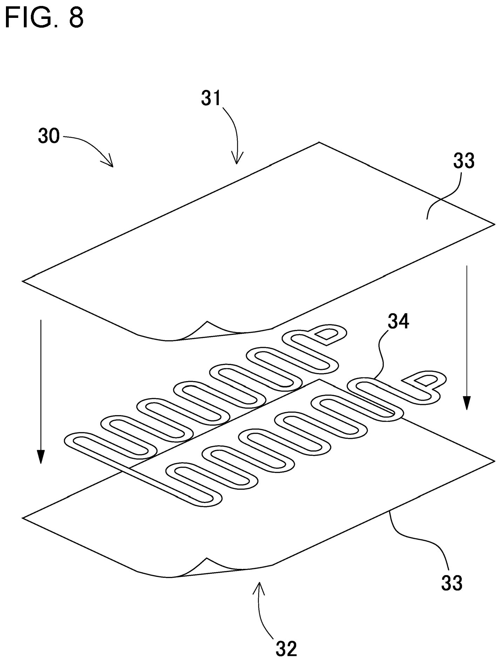

Heater unit 30 includes heating element 34 at a surface thereof. An example of heater unit 30 is shown in the exploded perspective view of FIG. 8. As shown in this figure, heater unit 30 includes heating element 34 formed in a predetermined pattern, sandwiched between films 33 with thermal conductivity. Heater unit 30 of this structure generates heat by Joule heat by energizing a heater wire as heating element 34.

Heater unit 30 preferably has a thin sheet shape. Heater unit 30 with a thin planar shape allows power supply device 100 to be thinner and smaller. Examples of heater units 30 with a planer shape include a PTC heater, an aluminum etching heater, and an electric heating wire heater.

### First Heat-Transfer Sheet 40

First heat-transfer sheet 40 is interposed between first heater surface 31 and each of first cell end surfaces 1A of secondary battery cells 1. First heat-transfer sheet 40 is made of material with high thermal conductivity, and efficiently conducts heat generated by heater unit 30 toward first cell end surface 1A. When a gap is generated in an interface between first heat-transfer sheet 40 and first cell end surface 1A, or an interface between first heat-transfer sheet 40 and heater unit 30, an air layer is formed and a heat insulating effect occurs. Therefore, in order to fill these interfaces without gaps, first heat-transfer sheet 40 is preferably made of a flexible material providing the surface with flexibility. In addition, first heat-transfer sheet 40 is preferably insulative in order to insulate the end surfaces of secondary battery cells 1. Silicone resin or the like can be suitably used as such a material.

First heat-transfer sheet 40 has substantially the same size as heater unit 30. In the examples shown in FIGS. 3-6, as heat-transfer sheet 40, four heat-transfer sheets are disposed between the side surface of battery module 2, that is, the right side in the figures, and the left side of heater unit 30.

### Second Heat-Transfer Sheet 50

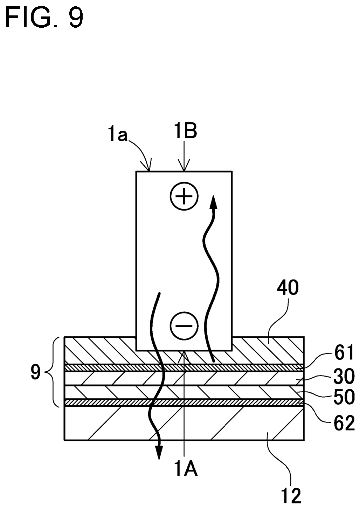

Second heat-transfer sheet 50 is disposed to face second heater surface 32 of heater unit 30. In the examples shown in FIGS. 5 and 9, second heat-transfer sheet 50 is interposed between heater unit 30 and bottom case 12. This configuration performs heat dissipation of secondary battery cells at bottom case 12 constituting first case surface 10a of outer case 10. Similar to first heat-transfer sheet 40, second heat-transfer sheet 50 is preferably made of material with high thermal conductivity. Second heat-transfer sheet 50 is preferably made of a flexible material providing the surface of second heat-transfer sheet 50 with flexibility. In addition, second heat-transfer sheet 50 is preferably insulative in order to insulate the end surfaces of secondary battery cells 1. As such a material, silicone resin may be suitably used.

Secondary battery cells generate heat by charging and discharging. For stable long-term use of secondary battery cells, the secondary battery cells is cooled. As described above, secondary battery cells may be heated and contrarily be cooled, depending on the ambient temperatures. In order to add these opposing functions, a heating mechanism and a cooling mechanism for secondary battery cells have been conventionally provided individually. However, since a space in which these mechanisms are disposed was limited around the secondary battery cells, and consequently, a power supply device becomes larger and becomes more complicated in configuration. In particular, secondary battery cells require a lead plate to be connected for electrical connection, so that space is further constrained.

In contrast, in accordance with this embodiment, a configuration is simplified by disposing a heat dissipation mechanism for dissipating heat from secondary battery cell 1, together with a heating mechanism for warming secondary battery cell 1, at first cell end surface 1A where heater unit 30 is provided. As shown in the schematic sectional view of FIG. 9, second heat-transfer sheet 50 is disposed at second heater surface 32 of heater unit 30 to be thermally bonded to outer case 10, and thermally bonds first cell end surface 1A of each of secondary battery cells 1 to bottom case 12 of outer case 10 from first heat-transfer sheet 40 at a side of first heater surface 31 via heater unit 30 and second heat-transfer sheet 50. This configuration provides a heat transfer path for dissipating heat to the outside of power supply device 100 through outer case 10.

Heater unit 30 thus sandwiched between first heat-transfer sheet 40 and second heat-transfer sheet 50 functions as heat transfer layer 9 as a whole. When secondary battery cell 1 is heated, as shown by the upward arrow in FIG. 9, heater unit 30 included in heat transfer layer 9 heats secondary battery cell 1 from the bottom surface. Furthermore, when secondary battery cell 1 is cooled, as shown by the downward arrow in FIG. 9, heat generated by secondary battery cell 1 is transferred toward bottom case 12 via heat transfer layer 9.

The examples shown in FIGS. 1-7 show examples in which power supply device 100 is provided in a vertical orientation, in other words, an example in which internal secondary battery cells 1 are provided in a horizontal position. But the present disclosure is not limited to such a position, and the power supply device may be disposed in a horizontal orientation as shown in FIG. 9, in other words, secondary battery cells 1 may be disposed in a vertical position. In this case, when secondary battery cells 1 are heated, heat is transferred upward by heater unit 30 disposed on the side near the first cell surface, that is, the bottom surface, preferably allowing the direction to coincide the direction of heat convection.

Cooling plate 70 connected to outer case 10 facilitates heat dissipation of the power supply device. In the example shown in FIG. 10, cooling plate 70 is fixed to an outer surface of bottom case 12 to be thermally coupled to the surface. This configuration allows a heat generation source, such as secondary battery cells 1 housed in outer case 10, to be thermally bonded to cooling plate 70 via second heat-transfer sheet 50 and bottom case 12, thereby allowing secondary battery cells 1 to be efficiently cooled by cooling plate 70. The cooling capacity of cooling plate 70 is enhanced by heat dissipation fins or a circulation path of the refrigerant inside cooling plate 70.

### First Insulating Sheet 61

First insulating sheet 61 may be interposed between heater unit 30 and first heat-transfer sheet 40. First insulating sheet 61 is made of material, such as silicone resin, with insulating property and thermal conductivity. First insulating sheet 61 between heater unit 30 and first heat-transfer sheet 40 insulates secondary battery cells 1 from heater unit 30 and outer case 10, thereby enhancing safety.

### Second Insulating Sheet 62)

Second insulating sheet 62 may be interposed between second heat-transfer sheet 50 and bottom case 12. Similar to first heat-transfer sheet 40, second insulating sheet 62 is also made of material, such as silicone resin, with insulating property and thermal conductivity. Second insulating sheet 62 between second heat-transfer sheet 50 and bottom case 12 insulates secondary battery cells 1 from heater unit 30 and outer case 10, thereby enhancing safety.

### Modified Example

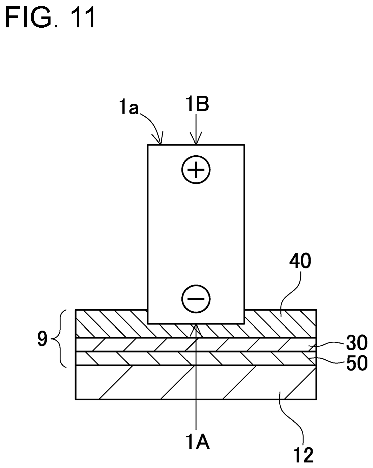

Depending on applications and specifications, first insulating sheet 61 and second insulating sheet 62 may be omitted. For example, in the case that first heat-transfer sheet 40 and second heat-transfer sheet 50 have insulating properties and sufficient pressure resistance, first insulating sheet 61 and second insulating sheet 62 may be omitted as shown in FIG. 11. On the contrary, in the case that first heat-transfer sheet 40 and second heat-transfer sheet 50 does not have insulating properties, or that first heat-transfer sheet 40 and second heat-transfer sheet 50 has insulating properties but do not have sufficient pressure resistance, the device includes first insulating sheet 61 and second insulating sheet 62, thereby enhancing insulation and safety.

The heater unit may be implemented by a single piece, or plural heater unit pieces may be disposed on a metal plate to cover the metal plate. Heater unit 30 shown in FIGS. 3-6 has substantially the same size and shape as metal plate 20. However, the size of heater unit 30 does not necessarily coincide that of metal plate 20, and an area of heater unit 30 may be smaller than that of the metal plate. In particular, as shown in, e.g., FIG. 7, in the case that outer case 10 is disposed in a vertical orientation, thermal convection occurs and the upper side is more likely to be heated. Therefore, the height of the heater unit may be lower than the metal plate, the bottom sides of the heater unit and the metal plate may be roughly aligned, and an exposed region not covered with the heater unit may be provided above the metal plate.

### Simulation Result

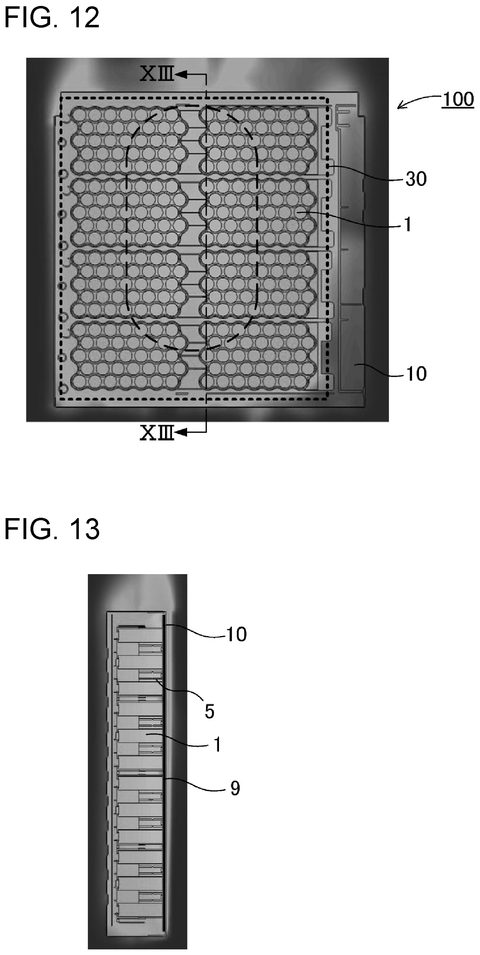

Simulation results of power supply device 100 according to Embodiment 1 heated by heater unit 30 are shown in FIGS. 12 and 13. FIG. 12 shows a simulation result as viewed from the second case surface 10b, that is, from the negative electrode of secondary battery cell 1 (at ambient temperature of 0°C). A region in which one heater unit 30 is disposed is shown by a dashed line. FIG. 13 shows the simulation result in a sectional view along line XIII-XIII shown in FIG. 12. These figures show that heater unit 30 heats 280 secondary battery cells 1 almost uniformly.

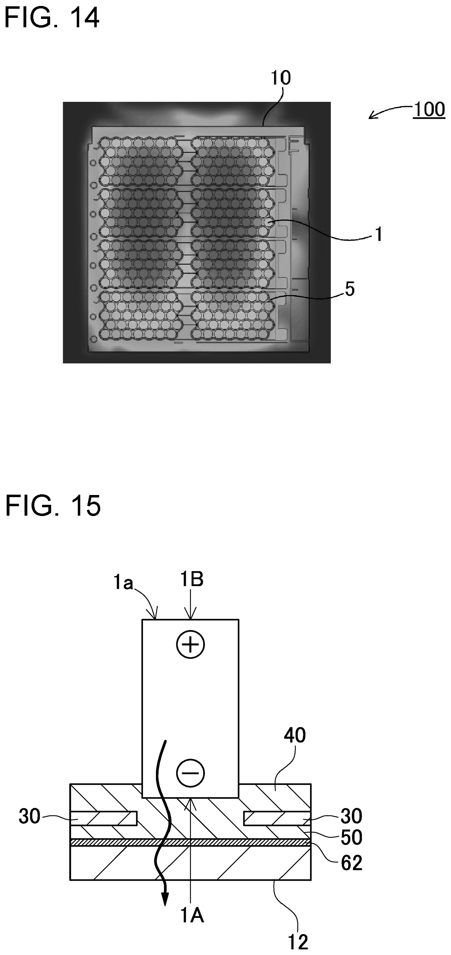

FIG. 14 shows a simulation result of secondary battery cells 1 cooled (ay ambient temperature of 45°C). As shown in this figure, the central part of battery module 2 where secondary battery cells 1 are particularly densely provided is hardly cooled, and the temperature in this part is relatively high.

As shown in, e.g., FIG. 9, a configuration in which both sides of heater unit 30 are sandwiched between first heat-transfer sheet 40 and second heat-transfer sheet 50 so as to function to both warming and cooling secondary battery cells 1 decreases the thermal conductivity of heater unit 30 as a core material and reduces the heat conductivity of heat transfer layer 9 as a whole.

On the other hand, when a large number of secondary battery cells 1 are heated by the planar heater unit 30, the central region in a plane of first heater surface 31 surrounded by other secondary battery cells 1 prevents heat from escaping and heats the cells easily. On the contrary, the peripheral region including fewer peripheral secondary battery cells 1 allows heat to be more likely to escape to the outside of heater unit 30, hardly heating the cells.

In view of these, it is considered that heating element 34 of planar heater unit 30 is dense at the periphery hardly heated and is sparse at the central region easily heated, rather than by uniform warming capacity to be exerted regardless of locations, thereby uniformly heating the cells. The heating element is sparse at the central region so that, as shown in FIG. 15, heat transfer layer 9 may have a portion in which heater unit 30 is partially absent. In this case, the absence of heater unit 30 that is an obstacle to heat conduction enhances thermal conductivity, as shown by the downward arrow in FIG. 15.

### Exemplary Embodiment 2

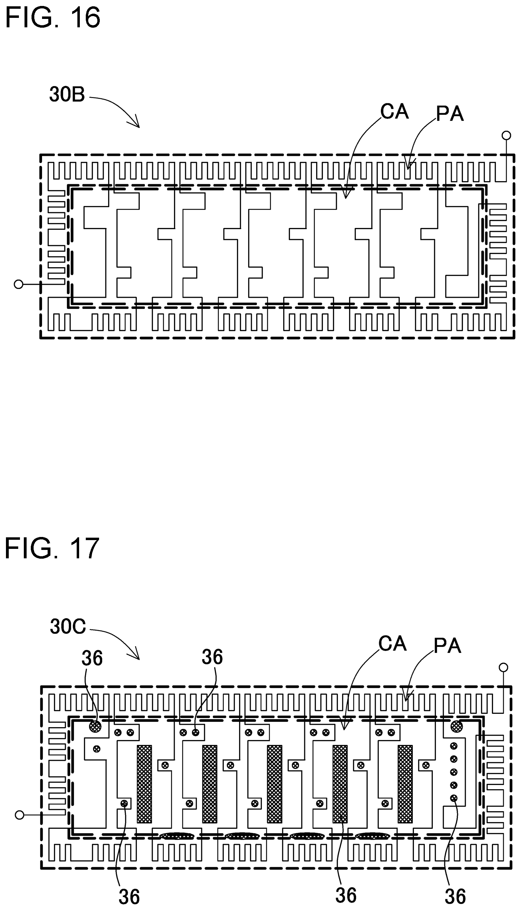

The thus devising disposition of heating element 34 constituting heater unit 30 enhances heat dissipation and cooling of secondary battery cells 1. Such an example is shown in FIG. 16 as a power supply device according to Exemplary Embodiment 2. In the power supply device according to Embodiment 2, components identical to those of Embodiment 1 are denoted by the same reference numerals, and their detailed descriptions will be omitted.

The density of heating element 34 in a central region CA of heater unit 30B is lower than that in a peripheral region PA of heater unit 30B. Specifically, as shown in the plan view of FIG. 16, the pattern of the heater wire constituting heating element 34 is formed in a single-stroke manner such that the heating element is dense at the peripheral region PA and is sparse at the central region CA. In this configuration, as in heat transfer layer 9 shown in FIG. 9, the peripheral region PA includes many regions including heating element 34 of heater unit 30B and is easily heated. On the other hand, the central region CA includes no heating element 34 of heater unit 30B and includes only the thermally conductive film 33, resulting in heat transfer layer 9 as shown in FIG. 15. Therefore, the central region CA is hardly heated as heating element 34 is sparse, accordingly uniformly heating secondary battery cell 1.

On the other hand, when secondary battery cells 1 dissipate heat, contrarily, as shown in FIG. 9, the presence of heater unit 30B relatively reduces thermal conductivity and reduces heat dissipation in the peripheral region PA. In the central region CA, as shown in FIG. 15, the thermal conductivity is enhanced as heating element 34 of heater unit 30B does not exist, accordingly facilitating heat dissipation. As a result, the heat dissipation of secondary battery cells 1 located in the central region CA, where heat was hardly dissipated, is enhanced, contributing to heat uniformity during heat dissipation.

In an example of heat transfer layer 9 shown in FIG. 15, first insulating sheet 61 is omitted in order to enhance heat dissipation property.

### Exemplary Embodiment 3

The thermal conductivity of a heat transfer layer is enhanced by an open window formed in the heater unit. Such an example is shown in FIG. 17 as a power supply device according to Exemplary Embodiment 3. In this figure, components identical to those of Embodiment 1 are denoted by the same reference numerals, and their detailed descriptions will be omitted.

Heater unit 30C shown in FIG. 17 has opening windows 36 provided in a part of the central region CA wherein no heater wire is disposed. In the figure, opening windows 36 are shown by cross-hatching for explanation. First heat-transfer sheet 40 and second heat-transfer sheet 50 stacked on heater unit 30C are extruded into and fill the part which opening windows 36 are formed. As a result, heat transfer layer 9 shown in FIG. 15 is formed, and enhancing thermal conductivity. Particularly in Embodiment 2, since film 33 of heater unit 30B is provided even in a region in which no heater wire is disposed, an interface is formed between first heater surface 31 and second heater surface 32 of heater unit 30C, and thermal conduction is reduced. However, in the power supply device according to Embodiment 2, an opening formed in heater unit 30C reduces the number of interfaces and enhances conductivity.

In the above examples, a stationary type power supply device is described as an example of a power supply device, but the present disclosure is not limited to this, and the power supply device used for other applications attached to electrical equipment to be powering and feeding the electrical equipment. Examples of electrical equipment include mobile objects such as electric vehicles and electric carts, and portable electrical equipment. In such electrical equipment, when the remaining capacity of the power supply device becomes low or when the power supply device deteriorates over time, the power supply device can be replaced, and the electrical equipment can be continuously used. However, the present disclosure is not limited to a replaceable type power supply device that mainly houses secondary battery cells, but can also be applied to an aspect in which secondary battery cells are stored in a housing of electrical equipment. In the present disclosure, a power supply device is sufficient as long as secondary battery cells are housed in a case, and the power supply device also includes a power supply device including a secondary battery cell to be driven built in the housing of the electrical equipment itself. In other words, the present disclosure is not limited to a replaceable power supply device, and can also be applied to electrical equipment including a built-in secondary battery cell.

### INDUSTRIAL APPLICABILITY

A power supply device according to the present invention may be suitably used as a backup power supply for servers, and the like, as a power storage device for home, office, factory, and the like, or as a power supply for driving mobile objects such as electric carts and electric scooters. The power supply can also be used appropriately as power supply for wireless devices and portable electrical equipment such as electric cleaners and power tools.

### REFERENCE MARKS IN THE DRAWINGS

- 100: power supply device
- 1: secondary battery cell
- 1A: first cell end surface
- 1B: second cell end surface
- 1a: cell exhaust mechanism
- 2: battery module
- 3: circuit board
- 4: board holder
- 5: battery holder
- 7: lead plate
- 8: busbar
- 9: heat transfer layer
- 10: outer case
- 10a: first case surface
- 10b: second case surface
- 10c: third case surface
- 10d: fourth case surface
- 10e: fifth case surface
- 10f: sixth case surface
- 11: main case
- 12: bottom case
- 13: front panel
- 14: housing space
- 15: gas exhaust port
- 20: metal plate
- 30, 30B, 30C: heater unit
- 31: first heater surface
- 32: second heater surface
- 33: film
- 34: heating element
- 36: opening window
- 40: first heat-transfer sheet
- 50: second heat-transfer sheet
- 61: first insulating sheet
- 62: second insulating sheet
- 70: cooling plate
- CA: central region
- PA: peripheral region

## Claims

1. A power supply device comprising:
a plurality of secondary battery cells, each of the plurality of secondary battery cells having a first cell end surface and a second cell end surface, the secondary battery cells being disposed such that the first cell end surface is flush with a single plane;
a heater unit having a planar shape having a first heater surface and a second heater surface, the first heater surface facing the first cell end surface of the each of the plurality of secondary battery cells;
a first heat-transfer sheet disposed between the first heater surface and the first cell end surface of the each of the plurality of secondary battery cells, the first heat-transfer sheet having thermal conductivity;
a second heat-transfer sheet facing the second heater surface, the second heat-transfer sheet having thermal conductivity; and
an outer case demarcating a housing space housing the plurality of secondary battery cells, the first heat-transfer sheet, the heater unit, and the second heat-transfer sheet, the outer case having a first case surface.

2. The power supply device according to claim 1, wherein
the outer case has an opening provided in at least the first case surface, and
the outer case includes a bottom case closing the opening in the first case surface, the bottom case facing the second heat-transfer sheet in the housing space, the bottom case having thermal conductivity.

3. The power supply device according to claim 2, further comprising a cooling plate connected to an outer surface of the bottom case to be coupled thermally with the outer surface of the bottom case.

4. The power supply device according to claim 2, further comprising:
a first insulating sheet interposed between the heater unit and the first heat-transfer sheet; and
a second insulating sheet interposed between the second heat-transfer sheet and the bottom case.

5. The power supply device according to claim 1, wherein
the heater unit includes a heating element in a surface thereof, and
the heating element is sparser at a central region of the heater unit than at a peripheral region the heater unit.

6. The power supply device according to claim 5, wherein the heater unit partially opens in the central region of the heater unit wherein the heating element is sparser.

7. The power supply device according to any one of claims 1 to 6, wherein
the each of the plurality of secondary battery cells includes a positive electrode at the second cell end surface,
the second cell end surface is connected to a lead plate, and
a lead plate facing the first cell end surface is not provided.
